# EUROPEAN PATENT SPECIFICATION

(11) **EP 1 680 302 B1**
(45) Date of publication and mention of the grant of the patent: **14.05.2008**
(21) Application number: 03772950.6
(22) Date of filing: 04.11.2003
(51) Int. Cl.: B60N 2/24, B60N 2/30, B60N 2/015

(54) **IMPROVED FOLD-UP SEAT/CHAIR FOR PEOPLE IN TRANSPORT VEHICLES**
KLAPPBARER SITZ FÜR VERKEHRSFAHRZEUG-PASSAGIERE
CHAISE/SIEGE PLIANTS AMELIORES POUR USAGERS DE VEHICULES DE TRANSPORT

(43) Date of publication of application: 19.07.2006
(73) Proprietor: Beheers & Beleggingsmaatschappij Verachtert B.V., 5334 Le Velddriel (NL)
(72) Inventor: VAN DER VAART-JONG, Helena Bibi, NL-5330 AB Kerkdriel (NL); KUIPERS, Roy, Gert Arnold, NL-5330 AB Kerkdriel (NL); SCHOUTEN, Marcel Johannes Hendricus, NL-5330 AB Kerkdriel (NL)
(74) Representative: Lips, Hendrik Jan George
(86) International application number: PCT/NL2003/000768
(87) International publication number: WO 2005/047053

(56) References cited:
- EP-A- 1 245 436
- WO-A-03/022101
- DE-A- 10 038 035
- DE-U- 9 308 776
- FR-A- 2 815 588
- GB-A- 2 128 473
- GB-A- 2 359 015
- PATENT ABSTRACTS OF JAPAN vol. 0082, no. 40 (M-336), 6 November 1984 (1984-11-06) -& JP 59 120533 A (MAZDA MOTOR CORP), 12 July 1984 (1984-07-12)

## Description

The invention relates to a device constructed as a fold-in, swing aside chair, also folding chair, further called fold-up chair, for placement onto a special applied floor in transport vehicles, such as mini busses, city busses, touring cars, ambulances, trains, trams, airplanes and such, wherein in its length the back support of the fold-up chair is supplied with a head support, wherein the back support can be folded down hingeably over the seat element to a practically horizontal position, wherein in the normal sitting position the chair shape is maintained by locks, wherein the fold-up chair is foldable over two mutual perpendicular not in the same horizontal plane situated axis of roatation into a suitable vertical position of the whole fold-up chair, wherein the first axis of rotation is situated between the back support and the seat element and the second axis of rotation is situated eccentrically lengthwise beneath the seat element, wherein blocking is done around the mentioned first axis of rotation by means of a first locking mechanism and around the mentioned second axis of rotation by means of a second locking mechanism, wherein in the mentioned extended vertical position the fold-up chair is spring loaded, wherein the foot support of the fold-up chair is constructed as rigid vertical beams hingeable mounted to the seat element. wherein the material of the supporting framework of the dismountable fold-up chair is a strong rigid material.

Such a fold-up chair is known by GB-A- 2 359 015. A drawback of this known chair is that in the fold-up position of this it takes room in the vehicle on a place which might hinder the use of the vehicle for other purposes and through which the interior of the transport vehicle aquires a less disered look.

It is the aim of the present invention to provide such a modified and improved fold-up chair for persons in transport vehicles, in which the afore mentioned disadvantages are solved and in which the device has a modern look and comfort.

The invention is defined by claim 1.

According to a further embodiment of the invention the fold-up chair is further characterized in that the first locking mechanism can be put into action by turming the head support in the back support, so that after unlocking a further safety lock the back support is rotatable over the first axis of rotation to a horizontal position.

By this an easy operation of the locking mechanism of said back support of the fold-up chair is obtained.

According to the invention the second locking mechanism of the fold-up chair consists of a hingeable spacial rod system, co-operating with spring loaded ratchets and tension springs in the seat element and being operable by means of said back support.

The advantage of this being that an effective and fast useable locking is obtained for a fixed and sturdy position of the seat element of said fold-up chair.

According to the invention it is prefered, that said head support has a circular circumference such that it, after rotating, can fall in a recess at the top side of said back support, in which a rod with damper operates said first locking mechanism.

Further said fold-up chair is characterized in that said foot support consists of two rigid buckled legs each provided with a supporting point for rotatable supporting said seat element, said second locking mechanism being formed by a U-profile section connected to a third supporting point, said section acting as a strut and being slidable and lockable in a part connected to said seat element and in operation is held under tension by a damper.

According to a further embodiment of the invention said two legs are connected to a base plate which is fastened to the floor, applied on the bottom plate of the transport vehicle, by means of T-head bolts with nuts or quick connectors.

The advantage is that in very less time the whole fold-up chair can be removed form the floor of the transport vehicle.

According to a further embodiment of the invention said first locking mechanism is actuated by folding in said head support and after that by moving an arm support backwards out of the vertical position, after which said back support with said head support is foldable over said first axis of rotation on said seat element, in which in almost horizontal position of said back support, said ratchet safety device of said seat element becomes unlocked.

Finally said fold-up chair according to the invention is characterized in that said second locking mechanisme is constructed in such a way, that after folding-in said back support over said seat element, the assembly of said back support and seat element can be swung aside over said second axis of rotation, after which the whole assembly of said back support and seat element ends up in vertical position against the side of the transport vehicle and is kept against the wall of said vehicle by torsion springs.

The advantages are a strong secured swinging aside of the fold-up chair, in which a simple specific procedure is followed, which requires little muscle power.

The preferred construction of the invention will be described by way of example, and with reference to the accompanying drawing.

In which:
- Fig. 1: shows a front view in oblique projection of the fold-up chair according to a preferred embodiment of the invention, in which only the frame construction is indicated and the upholstery is left out;
- Fig. 2: shows a side view over the line II of figure 1;
- Fig. 3: shows a front view over the line III of figure 1;
- Fig. 4: shows a view in oblique projection of the fold-up chair of figure 1, in which the back support is folded-in over the first axis of rotation;
- Fig. 5: shows a view in oblique projection of the fold-up chair of figure 1, in which the back support as well as the sitting element are folded in over respectively the first and second axis of rotation;
- Fig. 6: shows a front view of the folded-in fold-up chair over the line VI of figure 5, in which a flat right side of the open space of the transport vehicle is obtained.
- Fig. 7: shows a view over the line VII of figure 5;
- Fig. 8: shows a detail of the rotation point over the axis of rotation x-x, in which the first locking mechanism is converted; and
- Fig. 9: shows the support frame of the fold-up chair with axis of rotation y-y and second locking mechanism.

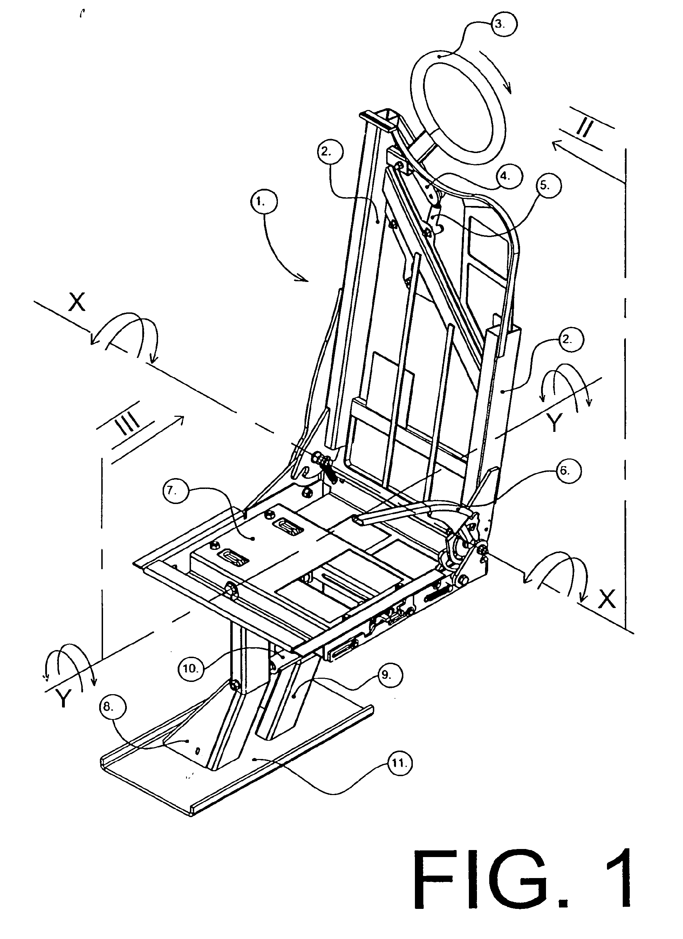

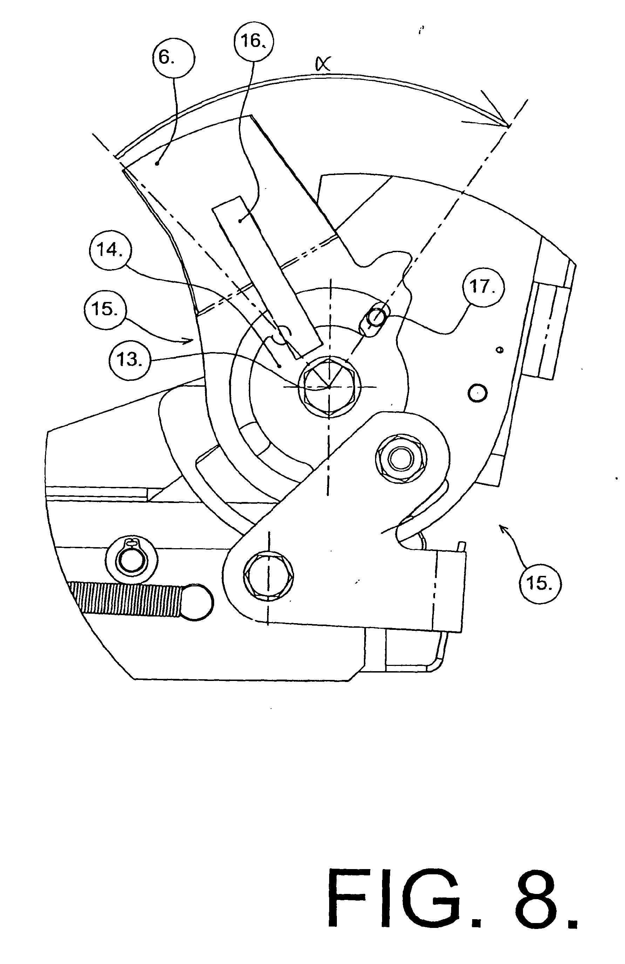

Figure 1 shows a view in oblique projection of the fold-up chair 1 according to a preferred embodiment of the invention. The chair consists of a back support 2 supplied with a swivelling head support 3, in which by turning it the back support is unlocked around the first axis of rotation x-x. By turning away the head support 3 in the frame of the back support 2, a rod 4 with damper 5 is moved and as a consequence unlocks the turning point of the back support on the seat indicated in figure 8. Now, by moving the handle 6, the arm support, backwards over an angle α the back support 2, due to the special construction of the turning point of figure 8, in this case only a frame of the fold-up chair is drawn, can be folded-in around the first axis of rotation x-x. In operation, the frame of the chair seat or seat 7 is in horizontal position firmly supported by the spacial rod system 8, 9, 10. When the angle between the back support 2 and the seat 7 is approximately 15 degrees, the seat 7 is unlocked over the axis y-y and the seat 7 with back support 2 can be tilted with a force of approximately 3 kg in the vertical position. The as rigid constructed legs 8, 9 with a buckled form are moment fixed on the base plate 11 by means of circumferential welds. It being rotateable of the seat 7 is thus around the second axis of rotation y-y.

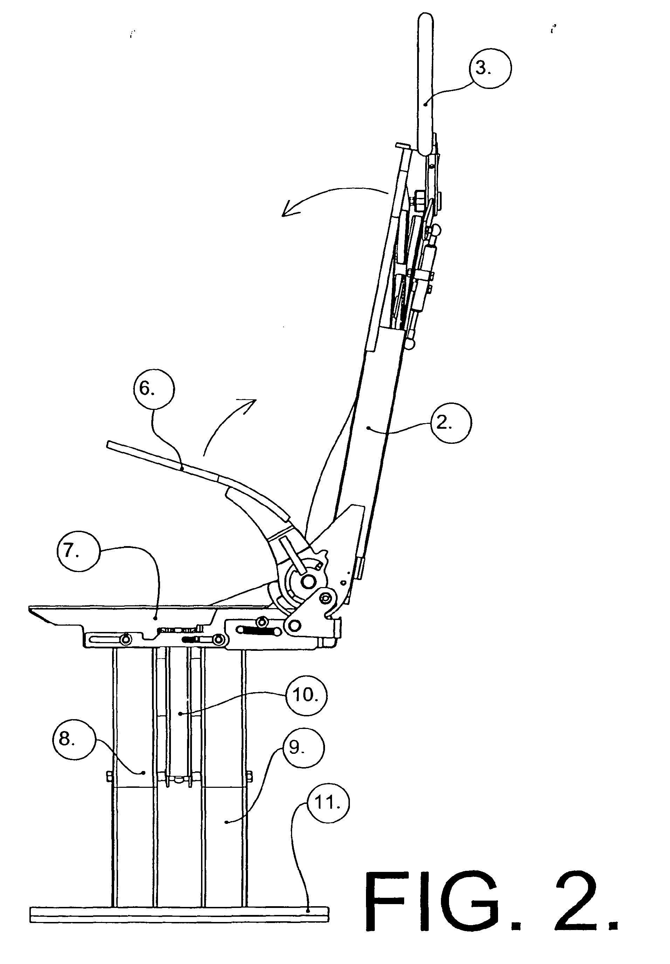

Figure 2 shows a side view over the line II of figure 1, in which the same parts are indicated with the same numbers. The base plate 11 can be fastened with special T-head bolts (not indicated) in a rail section part (not indicated) to the floor. It is also possible to execute this with bolts (also not indicated).

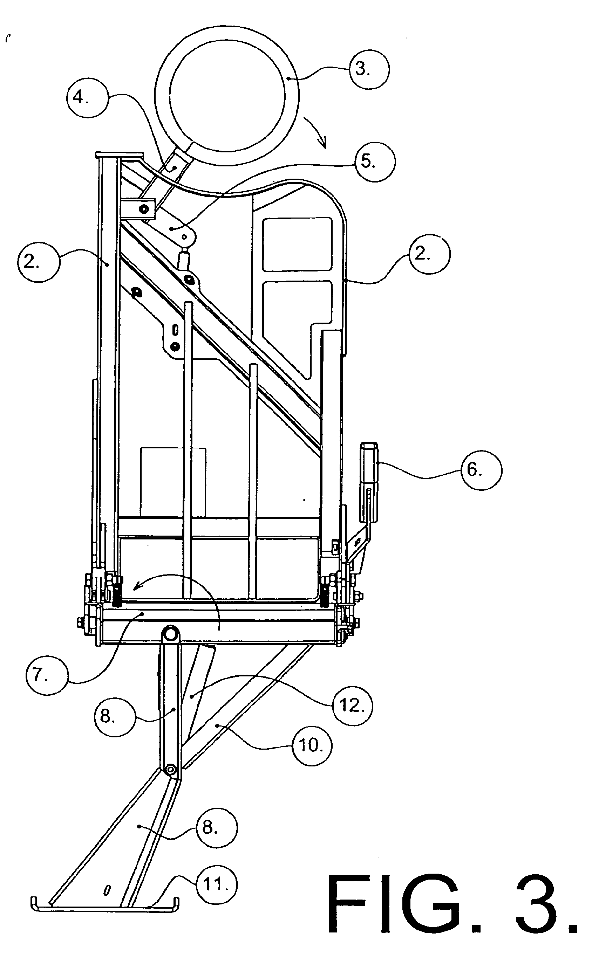

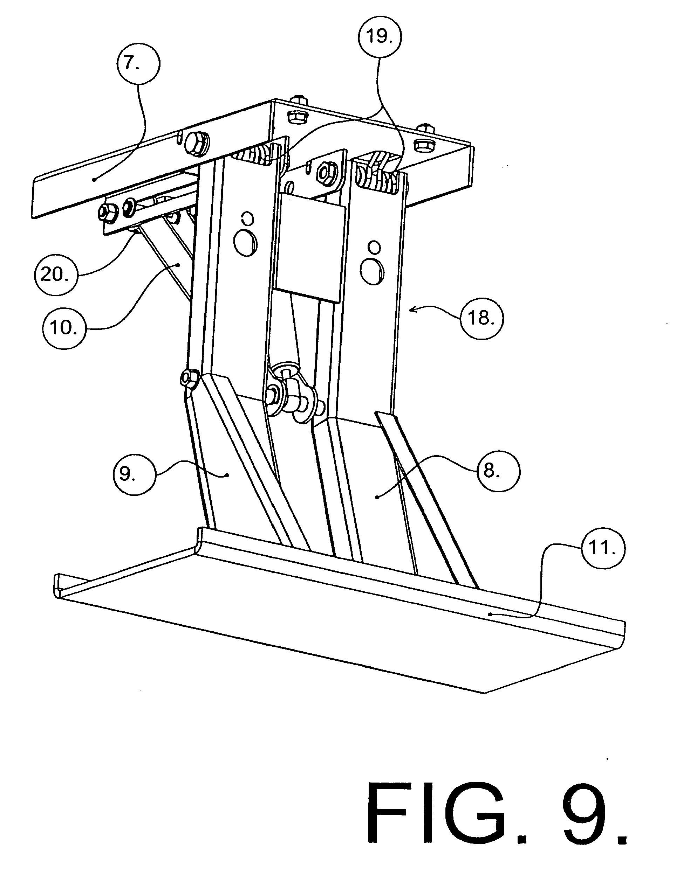

Figure 3 shows a front view over the line III of figure 1. In this figure it can clearly be seen that the special rods 8, 9 have a collapsed curve. Rod 10 is unlocked by a second unlocking mechanism 20, which is described in figure 9.

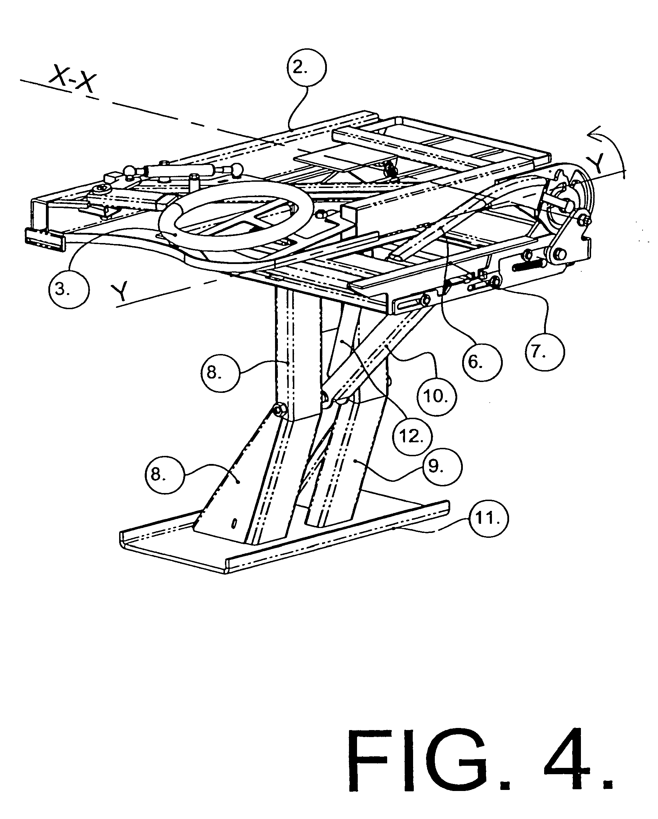

Figure 4 shows a view in oblique projection of the fold-up chair 1 of figure 1, in which the back support 2 is folded-in over the first axis of rotation x-x by unlocking the first unlocking mechanism 15 of figure 8.

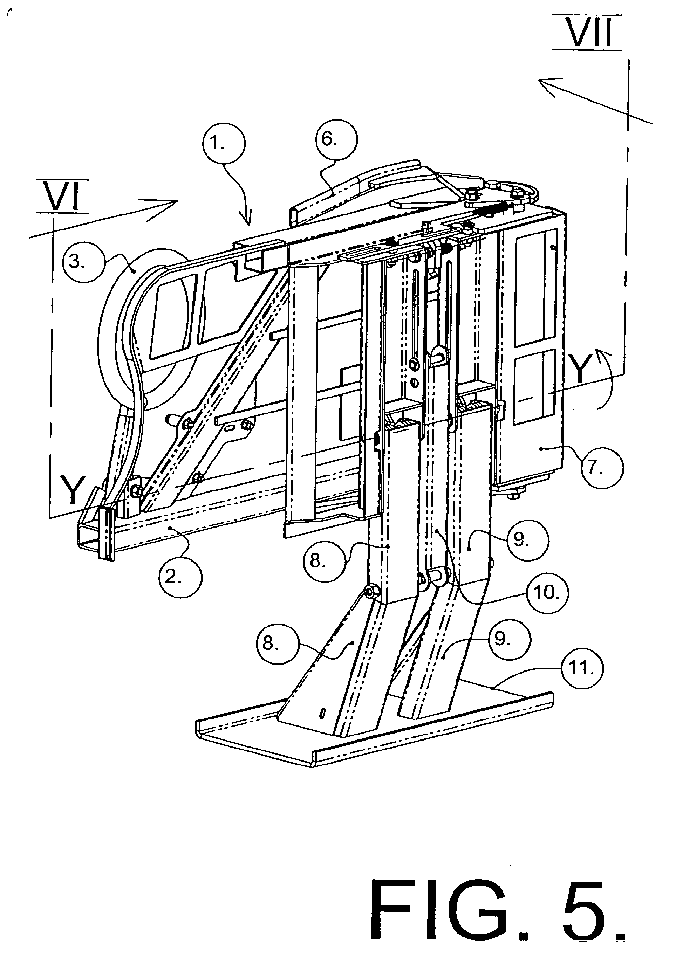

Figure 5 also shows the sitting element or the seat 7 at least the frame folded-in over the second axis of rotation y-y by unlocking the second unlocking mechanism of figure 9. A flat against the wall of the transport vehicle fold-up chair 1 is created, which in vertical sense is still beneath the window, so that from the outside no folded-in or swung away chair or seat 1 is visible.

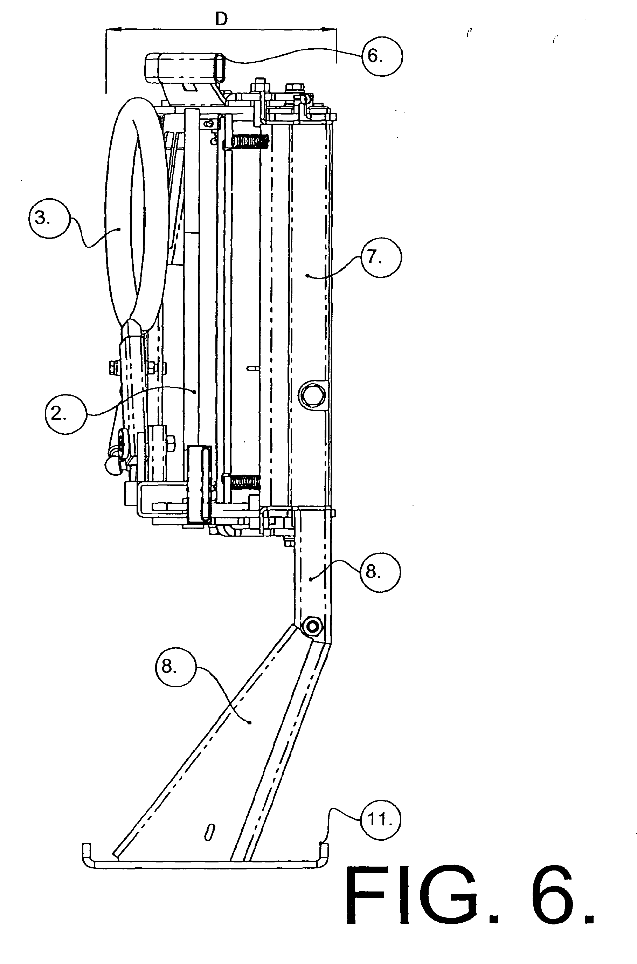

Figure 6 shows a front view over the line VI of figure 5. It is shown that a minimum of space is taken, meaning that the thickness D of the package back support 2 with the seat 7 is approximately 200 mm. The folded-up position is maintained by the applied springs around the first and second axes of rotation (x-x and y-y) .

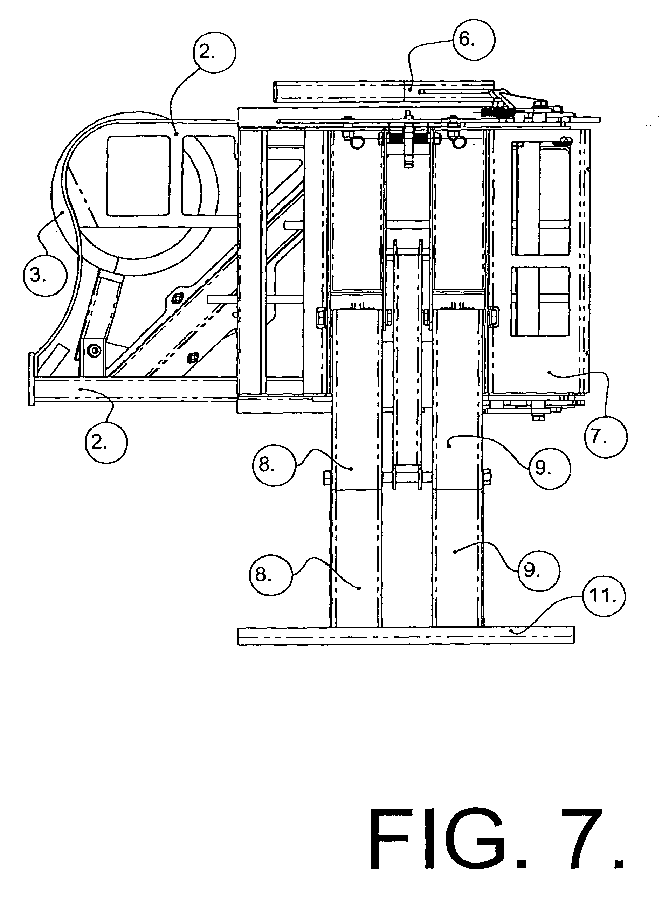

Figure 7 shows a view over the line VII of figure 5, in which this fold-up chair 1 also in swung away position gives a professional look, at an optimal use of space in the transport vehicle.

Figure 8 shows partly a detail of the special plate 14 of the turning point 13, forming the first locking mechanism 15, in which 16 is a stiffening bracket and 17 and 6 the handle of the arm support. The handle 6 with the arm support can be moved backwards over an angle α (approximately 90°) if the passenger does not require an arm support. The arm support with handle 6 is then parallel to the back support.

The head- or neck support 3 can be turned in as described and pulls a not indicated cable through which the spring loaded ratchet 17 is pulled upwards and the handle 6 can be pulled further backwards over an angle β.

By pulling the handle 6, the special plate 14 pushes away a ratchet and the back support 2 can be rotated flat onto the seat 7 and at an angle of 15 degrees the seat 7 also unlocks in order to be able to rotate over the horizontal axis y-y. If the back support 2 rests flat on the seat 7 the last mentioned ratchet locks the back support 2 onto the seat 7.

Figure 9 shows the support frame 18 of the fold-up chair 1. The spacial rod system 8, 9, 10 is already shown in the afore described figures.

The second locking mechanism 20 works as follows: By moving the back support 2, towards the seat 7 and the angle between them is still only approximately 15 degrees, the spring loaded plate is moved horizontally, through which again a ratchet shoots out and torsion springs 19 keep the folded-in or swung away chair spring loaded in vertical position around the axis of rotation y-y, as indicated in figures 5 up to 7.

Finally it has to be emphasized, that the above description constitutes preferred embodiments of the fold-up chair of the invention, but that further variations and modifications are still possible without departing the scope of this patent document.

## Claims

1. A device (1) constructed as a fold-in, swing aside chair, also folding chair, further called fold-up chair, for placement onto a special applied floor in transport vehicles, such as mini busses, city busses, touring cars, ambulances, trains, trams, airplanes and such, wherein in its length the back support (2) of the fold-up chair (1) is supplied with a head support (3), wherein the back support (2) can be folded down hingeably over the seat element (7) to a practically horizontal position, wherein in the normal sitting position the chair shape is maintained by locks, wherein the fold-up chair (1) is foldable over two mutual perpendicular not in the same horizontal plane situated axis of rotation (x,y) into a suitable vertical position of the whole fold-up chair (1), wherein the first axis (x) of rotation is situated between the back support (2) and the seat element (7) and the second axis of rotation (y) is situated eccentrically lengthwise beneath the seat element (7), wherein blocking is done around the mentioned first axis of rotation (x) by means of a first locking mechanism (15) and around the mentioned second axis of rotation (y) by means of a second locking mechanism (20), wherein in the mentioned extended vertical position the fold-up chair (1) is spring loaded, wherein the foot support of the fold-up chair is constructed as rigid vertical beams (8,9) hingeable mounted to the seat element (7), wherein the material of the supporting framework of the dismountable fold-up chair (1) is a strong rigid material, **characterized in that** in the vertical position the fold-up chair (1) due to its rotation about the second axis (y) is in a lowered position near the vehicles bottom (11), so that it is coupled torsionally stiff around the second axis (y) and it is also detachable from the horizontal surface of the floor plate (11) attached to the bottom plate of the transport vehicle.

2. Device according to claim 1, **characterized in that**, the first locking mechanisme (15) can be put into action by turning the head support (3) in the back support (2), so that after unlocking a further safety lock the back support (2) is rotatable over the first axis of rotation (x) to a horizontal position.

3. Device according to claim 1 or 2, **characterized in that**, the second locking mechanism (20) consists of a hingeable spacial rod system, co-operating with spring loaded ratchets and tension springs in the seat element (7).

4. Device according to one or more of the preceding claims, **characterized in that**, said head support (3) has a circular circumference and, after rotating, can fall in a recess at the top side of said back support (2), in which a rod (4) with damper (5) operates said first locking mechanism (15).

5. Device according to one or more of the preceding claims, **characterized in that**, said foot support consists of two rigid buckled legs (8,9) each provided with a supporting point for rotatable supporting said seat element (7), said second locking mechanism (20) being formed by a U-profile section (10) connected to a third supporting point, said section (10) acting as a strut and being slidable and lockable in a part connected to said seat element (7) and in operation is held under tension by a damper (12).

6. Device according to one or more of the preceding claims, **characterized in that**, said two legs (8,9) are connected to a base plate (11) which is fastened to the floor, applied on the bottom plate of the transport vehicle, by means of T-head bolts with nuts or quick connectors.

7. Device according to one or more of the claims 3 - 6, **characterized in that**, said first locking mechanism (15) is actuated by folding in said head support (3) and after that by moving an arm support (6) backwards out of the vertical position, after which said back support (2) with said head support (3) is foldable over said first axis of rotation (x) on said seat element (7), in which in almost horizontal position of said back support (2), said ratchet safety device of said seat element (7) becomes unlocked.

8. Device according to one or more of the preceding claims, **characterized in that**, said second locking mechanism (20) is constructed in such a way, that after folding-in said back support (2) over said seat element (7), the assembly of said back support and seat element can be swung aside over said second axis of rotation (y), after which the whole assembly of said back support (2) and seat element (7) ends up in vertical position against the side of the transport vehicle and is kept against the wall of said vehicle by torsion springs (19).

## Patentansprüche

1. Vorrichtung, ausgebildet als einklappbarer Schwenkstuhl, ferner als Klappstuhl, auch als Faltstuhl bezeichnet, zur Anordnung auf einem speziell angelegten Boden in Transportfahrzeugen, wie Minibussen, Stadtbussen, Reisewagen, Rettungswagen, Zügen, Straßenbahnen, Flugzeugen und dergleichen,
worin die Rückenstütze (2) des Faltstuhls (1) in Längsrichtung mit einer Kopfstütze (3) versehen ist,
worin die Rückenstütze (2) gelenkig auf das Sitzelement hin (7) zu einer praktisch horizontalen Position zusammengefaltet werden kann,
worin die Stuhlform in der normalen Sitzposition durch Verschlüsse aufrechterhalten wird,
worin der Faltstuhl (1) über zwei zueinander senkrechte, nicht in derselben horizontalen Ebene liegende Drehachsen (x, y) in eine passende vertikale Position des gesamten Faltstuhls faltbar ist,
worin sich die erste Drehachse (x) zwischen der Rückenstütze (2) und dem Sitzelement (7) befindet, und sich die zweite Drehachse (y) exzentrisch in Längsrichtung unterhalb des Sitzelements (7) befindet,
worin die Verriegelung um die oben erwähnte erste Drehachse (x) durch einen ersten Verriegelungsmechanismus (15) und um die oben erwähnte zweite Drehachse durch einen zweiten Verriegelungsmechanismus (20) ausführbar ist,
worin der Faltstuhl (1) in der oben erwähnten ausgefahrenen Vertikalposition federbelastet ist,
worin die Fuß-Stütze des Faltstuhls aus starren Vertikalholmen (8,9) ausgebildet ist, die gelenkig am Sitzelement (7) befestigt sind,
worin das Material des tragenden Rahmens des zerlegbaren Faltstuhls (1) ein hartes, steifes Material ist,
**dadurch gekennzeichnet, dass**
der Faltstuhl (1) in der vertikalen Position aufgrund seiner Drehung um die zweite Achse (y) sich in einer tieferen Position nahe dem Fahrzeugboden befindet, so dass er torsionsfest an der zweiten Achse (y) gekoppelt und auch lösbar von der horizontalen Oberfläche der Fußbodenplatte (11) ist, die am Bodenblech des Transportfahrzeugs befestigt ist.

2. Vorrichtung gemäß Anspruch 1, **dadurch gekennzeichnet, dass** der erste Verriegelungsmechanismus (15) durch Drehung der Kopfstütze (3) in die Rückenstütze (2) in Aktion versetzt werden kann, so dass die Rückenstütze (2) nach dem Entriegeln eines weiteren Sicherheitsveschlusses über die erste Drehachse (x) in eine horizontale Position drehbar ist.

3. Vorrichtung gemäß Anspruch 1 oder 2, **dadurch gekennzeichnet, dass** der zweite Verriegelungsmechanismus (20) aus einem gelenkigen räumlichen Stabsystem besteht, das mit federbelasteten Ratschen und Spannfedern im Sitzelement (7) zusammenwirkt.

4. Vorrichtung gemäß einem oder mehreren der voranstehenden Ansprüche, **dadurch gekennzeichnet, dass** die Kopfstütze (3) einen kreisförmigen Umfang hat und nach der Drehung in eine Ausnehmung auf der Oberseite der Rückenstütze (2) fallen kann, in der ein Stab (4) mit Dämpfer (5) den ersten Verriegelungsmechanismus (15) betätigt.

5. Vorrichtung gemäß einem oder mehreren der voranstehenden Ansprüche, **dadurch gekennzeichnet, dass** die Fußstütze aus zwei steifen, gebogenen Holmen (8, 9) besteht, von denen jeder mit einem Auflagerpunkt für das drehbar gelagerte Sitzelement (7) ausgestattet ist, der zweite Verriegelungsmechanismus (20) aus einem U-Profilabschnitt (10) gebildet ist, der mit einem dritten Auflagerpunkt verbunden ist, wobei der Abschnitt (10) als Strebe wirkt und verschiebbar und verriegelbar in einem Bauteil ist, das mit dem Sitzelement (7) verbunden ist und im Betrieb durch ein Dämpfungselement (12) unter Spannung gehalten wird.

6. Vorrichtung gemäß einem oder mehreren der voranstehenden Ansprüche, **dadurch gekennzeichnet, dass** die zwei Holme (8, 9) mit einer Rundplatte (11) verbunden sind, die am Boden befestigt ist, wobei die Rundplatte (11) am Bodenblech des Transportfahrzeugs durch Hammerschrauben (T-head bolts) mit Sicherungsmuttern oder Schnellverbindern angelegt befestigt ist.

7. Vorrichtung gemäß einem oder mehreren der Ansprüche 3 bis 6, **dadurch gekennzeichnet, dass** der erste Verriegelungsmechanismus (15) durch das Einklappen der Kopfstütze (3) betätigt wird und danach durch Bewegung einer Armstütze (6) rückwärts aus der Vertikalposition, wobei danach die Rückenstütze (2) mit der Kopfstütze (3) über die erste Drehachse (x) auf das Sitzelement (7) klappbar ist, und dass in nahezu horizontaler Position der Rückenstütze (2) die Ratschensicherungsvorrichtung des Sitzelements (7) entriegelt bei wird.

8. Vorrichtung gemäß einem oder mehreren der voranstehenden Ansprüche, **dadurch gekennzeichnet, dass** der zweite Verriegelungsmechanismus (20) derart ausgebildet ist, dass nach dem Einklappen der Rückenstütze (2) auf das Sitzelement (7) die Anordnung der Rückenstütze und des Sitzelements über die zweite Drehachse (y) zur Seite geschwenkt werden kann, wonach die gesamte Anordnung von Rückenstütze (2) und Sitzelement (7) in vertikaler Position an der Seite des Transportfahrzeugs endet und durch Drehfedern (19) an der Wand des Fahrzeugs gehalten wird.

## Revendications

1. Dispositif (1) construit en tant que siège escamotable, basculant sur le côté, également siège pliant, encore appelé siège repliable, destiné à être placé sur un plancher spécial rapporté dans des véhicules de transport, tels que des minibus, des autobus, des cars de tourisme, des ambulances, des trains, des tramways, des avions et analogues, dans lequel le support de dossier (2) du siège repliable (1) est équipé sur sa longueur d'un appui-tête (3), dans lequel le support de dossier (2) peut être rabattu par articulation sur l'élément d'assise (7) en une position pratiquement horizontale, dans lequel, dans la position assise normale, la forme du siège est maintenue par verrouillage, dans lequel le siège repliable (1) est pliable suivant deux axes de rotation (x, y) mutuellement perpendiculaires non situés dans le même plan horizontal vers une position verticale appropriée de l'ensemble du siège repliable (1), dans lequel le premier axe (x) de rotation est situé entre le support de dossier (2) et l'élément d'assise (7) et le second axe de rotation (y) est situé de façon excentrique dans la direction longitudinale sous l'élément d'assise (7), dans lequel un blocage est réalisé autour du premier axe de rotation mentionné (x) au moyen d'un premier mécanisme de verrouillage (15) et autour du second axe de rotation mentionné (y) au moyen d'un second mécanisme de verrouillage (20), dans lequel, dans la position verticale étendue mentionnée, le siège repliable (1) est chargé par ressorts, dans lequel le pied de support du siège repliable est construit sous la forme de poutres verticales rigides (8, 9) montées par des articulations sur l'élément d'assise (7), dans lequel le matériau du cadre de support du siège repliable démontable (1) est un matériau rigide résistant, **caractérisé en ce que**, dans la position verticale, le siège repliable (1), du fait de sa rotation autour du second axe (y), est dans une position abaissée proche du fond (11) du véhicule, de sorte qu'il est couplé en torsion rigide autour du second axe (y) et qu'il est également détachable de la surface horizontale de la plaque de plancher (11) fixée à la plaque de fond du véhicule de transport.

2. Dispositif selon la revendication 1, **caractérisé en ce que** le premier mécanisme de verrouillage (15) peut être mis en action en tournant l'appui-tête (3) dans le support de dossier (2) de sorte que, après déverrouillage d'un autre verrouillage de sécurité, le support de dossier (2) peut être mis en rotation autour du premier axe de rotation (x) vers une position horizontale.

3. Dispositif selon la revendication 1 ou 2, **caractérisé en ce que** le second mécanisme de verrouillage (20) consiste en un système à tige spatiale articulée, coopérant avec des cliquets à ressorts et des ressorts de tension dans l'élément d'assise (7).

4. Dispositif selon une ou plusieurs des revendications précédentes, **caractérisé en ce que** ledit appui-tête (3) a une circonférence circulaire et, après rotation, peut descendre dans un évidement du côté supérieur du support de dossier (2), dans lequel une tige (4) à amortisseur (5) actionne ledit premier mécanisme de verrouillage (15).

5. Dispositif selon une ou plusieurs des revendications précédentes, **caractérisé en ce que** ledit pied de support est constitué de deux béquilles rigides gauchies (8, 9), pourvues chacune d'un point support pour supporter en rotation ledit élément d'assise (7), ledit second mécanisme de verrouillage (20) étant formé par une section à profil en U (10) reliée à un troisième point support, ladite section (10) servant de montant et pouvant coulisser et se verrouiller dans une pièce reliée audit élément d'assise (7) et, en fonctionnement, est maintenue sous tension par un amortisseur (12).

6. Dispositif selon une ou plusieurs des revendications précédentes, **caractérisé en ce que** lesdites deux béquilles (8, 9) sont connectées à une plaque de base (11) qui est fixée au plancher, rapportée sur la plaque de fond du véhicule de transport, au moyen de boulons à tête en T avec des écrous ou des raccords rapides.

7. Dispositif selon une ou plusieurs des revendications 3 à 6, **caractérisé en ce que** ledit premier mécanisme de verrouillage (15) est actionné en repliant ledit appui-tête (3) et ensuite en déplaçant vers l'arrière hors de la position verticale un accoudoir (6), après quoi ledit support de dossier (2) avec ledit appui-tête (3) peut être plié autour dudit premier axe de rotation (x) sur ledit élément d'assise (7), dans lequel, en position presque horizontale dudit support de dossier (2), ledit dispositif de sécurité à liquet dudit élément d'assise (7) devient déverrouillé.

8. Dispositif selon une ou plusieurs des revendications précédentes, **caractérisé en ce que** ledit second mécanisme de verrouillage (20) est construit de telle manière qu'après avoir rabattu ledit support de dossier (2) sur ledit élément d'assise (7), l'ensemble dudit support de dossier et dudit élément d'assise peut être basculé sur le côté autour dudit second axe de rotation (y), après quoi tout l'ensemble dudit support de dossier (2) et de l'élément d'assise (7) aboutit en position verticale contre le côté du véhicule de transport et est maintenu contre la paroi dudit véhicule par des ressorts de torsion (19).
